# FASCICULE DE BREVET EUROPEEN

(11) **EP 0 376 087 B1**
(45) Date de publication et mention de la délivrance du brevet: **09.03.1994**
(21) Numéro de dépôt: 89123204.3
(22) Date de dépôt: 15.12.1989
(51) Int. Cl.: G06K 7/06

(54) **Lecteur de carte à puce**
Chipkartenabtaster
Chip card reader

(30) Priorité: 20.12.1988 FR 8816819
(43) Date de publication de la demande: 04.07.1990
(73) Titulaire: CONNECTORS PONTARLIER, F-92400 COURBEVOIE (FR)
(72) Inventeur: Pernet, Michel, F-25300 Doubs (FR)
(74) Mandataire: Weinmiller, Jürgen

(56) Documents cités:
- EP-A- 0 263 746
- EP-A- 0 274 534
- DE-A- 3 442 397
- FR-A- 2 505 523
- FR-A- 2 599 530

## Description

La présente invention concerne les lecteurs de carte à puce et, plus particulièrement, un tel lecteur de carte à puce qui soit pourvu de moyens mécaniques établissant une pression entre la carte insérée dans lecteur et les contacts de lecture.

On trouvera, dans la demande de brevet français n° 8715739, déposée le 13 novembre 1987 par la Société Demanderesse, une description des lecteurs de carte à puce en général et d'un cadre de contact pour carte à puce, en particulier. Il y est indiqué qu'un tel lecteur comprend des moyens de guidage ou de positionnement de carte, éventuellement des moyens servant à vérifier qu'une carte est présente dans le lecteur, dans la position adéquate pour la lecture, ainsi que des élément de contact qui assurent le raccordement électrique avec des plage conductrices de la carte à puce, par lesquelles sont établis des circuits intéressant l'appareil incorporant le lecteur de carte à puce. Le cadre de contact est un élément unitaire remplissant les fonctions énoncées. Il permet de faire que, compte tenu des tolérances de fabrication, la flexion des éléments de contact, à l'insertion d'une carte à puce soit toujours telle que la pression de contact requise soit obtenue.

Une telle conception présente l'inconvénient que les éléments de contact appliquent la pression de contact mentionnée, dès le début de l'insertion de la carte, avant que celle-ci soit en position de lecture. Il en résulte un frottement inutilement fort de ces éléments de contact sur la carte en causant une usure excessive. En raison de cet état de fait, la pression de contact recherchée est la plus faible qui donne encore des performances satisfaisantes en matière de contact électrique. Par ailleurs, comme mentionné dans cette demande antérieure, la pression des éléments de contact sert également à retenir la carte dans le lecteur, à l'encontre la force de rappel d'un contact de fin de course, par exemple. Dans la mesure où cette pression de contact est limitée, il s'ensuit aussi que la pression de contact du contact de fin de course est également limitée.

Ces différentes considérations conduisent à ce qu'il soit souhaitable que la pression de contact entre les éléments de contact du lecteur de carte à puce et les plages de contact de la carte à puce soit établie, au moins partiellement par des moyens mécaniques intervenant alors que la carte est sensiblement dans la position de lecture pour l'établissement des circuits avec la carte à puce.

Dans le document de brevet EP-A- 0 274 534, il est décrit un lecteur de carte à puce atteignant ce résultat en ce qu'il comprend un chariot mobile ayant une position de repos qu'il occupe en l'absence de carte dans le lecteur, sous l'influence d'un moyen de rappel, et une position d'actionnement dans laquelle il est poussé par une carte introduite dans le lecteur, ledit chariot étant agencé pour coopérer avec des éléments de contact de manière que, lorsqu'il est en position de repos, le chariot fait que les éléments de contact soient maintenus dans une situation de repos dans laquelle ils sont en dehors du trajet d'insertion d'une carte et que, lorsqu'il est en position d'actionnement, le chariot fait que ces éléments de contact viennent en appui sur les emplacements de contact de la carte.

La carte pour laquelle est prévu ce lecteur comporte des contacts disposés en une rangée le long du bord "avant" de la carte, introduit en premier dans le lecteur. Les éléments de contact sont donc disposés au fond du lecteur et ce sont des lames élastiques qui s'étendent, depuis un support, dans la direction d'insertion de la carte. Selon ce document, les éléments de contact sont prolongés au-delà de la partie de contact, par un bras d'actionnement terminé par une came d'actionnement. Le chariot agit sur cette came d'actionnement pour maintenir les éléments de contact en situation de repos, puis, à l'introduction d'une carte, pour les faire venir en appui sur les emplacements de contact de la carte.

Une telle disposition n'est évidemment pas adaptée au cas des cartes à puce dont les plages conductrices sont disposées en deux rangées éloignées du bord avant de la carte.

Le document de brevet EP-A- 0 263 746 concerne un lecteur de carte d'identification similaire et appelle les mêmes remarques que le document EP-A- 0 274 534.

Le document du brevet DE-A-3 442 397 concerne un lecteur adapté au cas des cartes à puce dont les plages conductrices sont disposées en deux rangées éloignées du bord avant de la carte et emploie une rampe d'actionnement de l'élément de contact. Mais dans ce lecteur les éléments de contacts sont portés par le chariot et non pas par le cadre stationnaire, ce qui nécessite une connexion flexible entre chariot et cadre stationnaire. Par ailleurs, les rampes sont aménagées dans une pièce qui glisse transversalement par rapport au chariot, disposition qui nécessite une pièce mobile additionnelle.

La présente invention a pour objet un lecteur de carte à puce comprenant un chariot agencé pour coopérer avec des éléments de contact qui peuvent être disposés loin du bord avant de la carte et en deux rangées au moins.

Le lecteur de carte à puce de l'invention telle que revendiquée se caractérise en ce que ledit chariot comporte une rampe coopérant avec un épaulement prévu près de l'extrémité de chaque élément de contact, cette rampe étant aménagée dans la matière d'un flanc d'une fente du chariot dans laquelle est disposé l'élément de contact.

Selon une autre caractéristique de l'invention, le mode de coopération entre le chariot et les éléments de contact est tel que, lorsqu'il est en position de repos, le chariot soulève les éléments de contact, à l'encontre de leur propre force de rappel, et les maintient ainsi en dehors du trajet d'insertion d'une carte et que, lorsqu'il est en position d'actionnement, une carte étant insérée dans le lecteur, le chariot ait libéré les éléments de contact qui sont ainsi en appui contre les emplacements de contact de la carte, sous l'effet de leur propre force de rappel.

Selon une autre caractéristique de l'invention, chaque élément de contact comporte deux épaulements et le chariot comporte deux rampes coopérant respectivement avec ces épaulements, disposés de part et d'autre de l'axe longitudinal de l'élément de contact.

Selon une autre caractéristique de l'invention, ces deux épaulements sont obtenus par une conformation en T de l'extrémité libre de l'élément de contact.

Selon une autre caractéristique de l'invention, le chariot est maintenu par le cadre de contact, par coopération de forme, de manière à pouvoir se déplacer par glissement d'une desdites positions à l'autre.

Selon une autre caractéristique de l'invention, le chariot est composé de deux parties, afin de permettre un assemblage facile de contact et du chariot.

Selon une autre caractéristique de l'invention, le cadre de contact, ou une autre partie du lecteur, porte un doigt élastique servant de moyen de rappel du chariot et disposé à cette fin de manière à pousser le chariot vers sa position de repos.

Selon une autre caractéristique de l'invention, le chariot comporte un évidemment dans lequel est logée une pièce d'entraînement, lequel s'appuie, d'un côté, sur une surface d'appui du cadre de contact et dépasse, de l'autre côté dans le trajet d'insertion d'une carte, de sorte qu'une carte insérée rencontre la pièce d'entraînement, peu avant la fin de son trajet d'insertion, et entraîne le chariot par l'intermédiaire de la pièce d'entraînement, de sa position de repos à sa position d'actionnement.

Selon une autre caractéristique de l'invention, ladite pièce d'entraînement est de symétrie circulaire, avec l'axe de symétrie sensiblement perpendiculaire à la direction d'insertion d'une carte.

Selon une autre caractéristique de l'invention, la pièce d'entraînement est une galet cylindrique.

Selon une autre caractéristique de l'invention, ladite surface d'appui comprend un logement correspondant à ladite position d'actionnement et destiné à recevoir une partie de la pièce d'entraînement, suffisante pour que celle-ci cesse d'être en saillie dans le trajet d'insertion d'une carte, de sorte que la carte, dans la suite de son trajet d'insertion, jusqu'à une position finale dans laquelle elle rencontre une butée, maintienne la pièce d'entraînement dans ledit logement et maintienne par conséquent le chariot dans la position d'actionnement, tandis que le frottement les éléments de contact sur les emplacements de contact de la carte assure un nettoyage des contacts.

Les différents objets et caractéristiques de l'invention seront maintenant exposés dans de plus amples détails dans la description qui va suivre, fournie à titre d'exemple non limitatif, en se référant aux figures annexées qui représentent :
- les figures 1a, 1b, 1c, des vues de dessus, de bout et de dessous d'un lecteur de carte à puce conforme à la présente invention,
- la figure 2 une vue de dessous du cadre de contact du lecteur de la figure 1, incluant le chariot actionnant les éléments de contact,
- la figure 3, une vue en coupe partielle selon la ligne A-A de la figure 2.
- Les figures 4 et 5, deux vues en coupe partielle selon la ligne B-B de la figure 2 représentant le lecteur avec le chariot en position de repos et en position d'actionnement,
- la figure 6 une vue en perspective avec une coupe partielle selon l'une des fentes, de la partie 8B du chariot conforme aux figures précédentes.

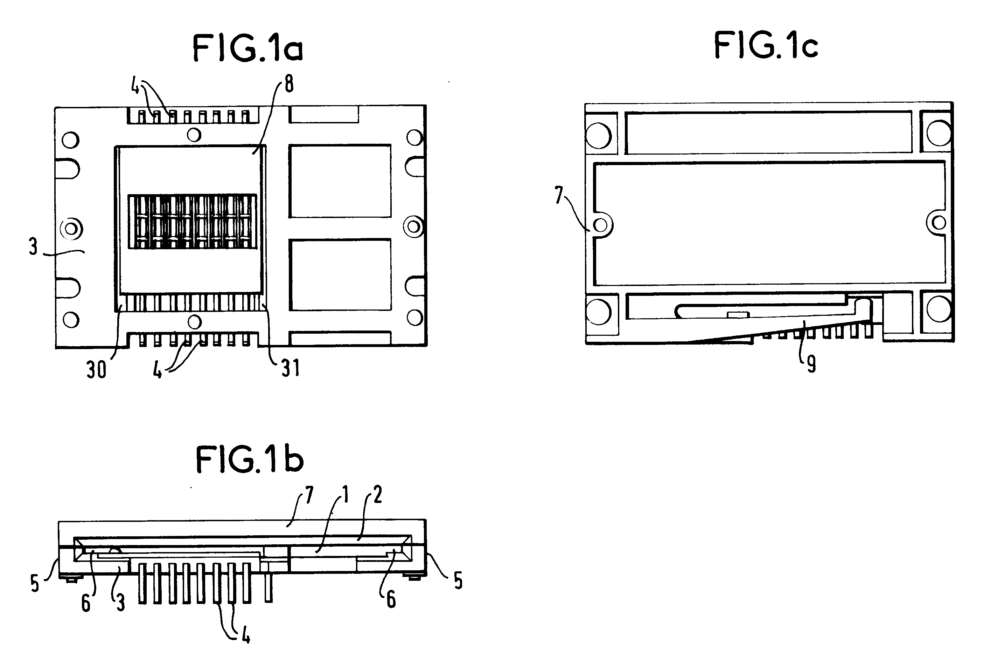

Un exemple de réalisation du lecteur de la présente invention est d'abord illustré par les figures 1a à 1c. On voit qu'il s'agit d'un ensemble unitaire comprenant une fente d'introduction de carte 1, dont certains des bords 2 sont chanfreinés, afin de guider une carte vers l'intérieur du lecteur. Ce lecteur accommode toutes les fonctions électriques et mécaniques nécessaires à la lecture d'une carte à puce.

Il comporte essentiellement un cadre de contact 3 portant des éléments de contact qui sont des sections de bande minces et profilées prise par surmoulage dans la matière du cadre 3. Les extrémités latérales 5 du cadre 3 contribuent à la formation de glissières 6 constituant des moyens de guidage latéral de la carte jusqu'à son positionnement en vue de la lecture de la puce. Au cadre 3 est associé un couvercle 7 fixé par tous moyens à la partie inférieure ducadre 3.

Le cadre de contact 3 porte un chariot 8 qui a pour fonction d'actionner les éléments de contact, comme on verra par la suite. A la figure 1a, ce chariot est représenté dans une position de repos, alors qu'aucune carte n'est insérée dans le lecteur. Il est poussé dans cette position par un levier élastique 9 également représenté en position de repos à la figure 1c. On verra plus loin qu'une carte insérée dans le lecteur par la fente d'insertion 1 pousse en fin de course le chariot 8, à l'encontre de la force de rappel fournie par le ressort 9.

Pour de nombreux détails de réalisation du cadre 3 et du couvercle 7 on se référera avantageusement à la demande de brevet mentionnée au début de ce texte.

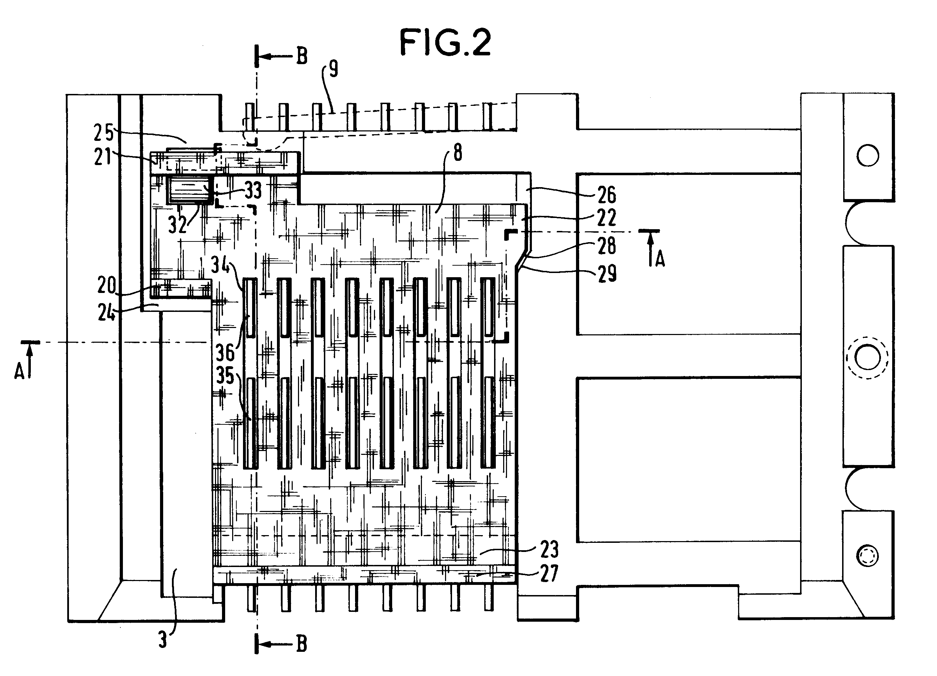

La figure 2 représente, agrandi par rapport à la figure 1, une vue de dessous du cadre de contact 3 de la figure 1a, le couvercle 7 étant enlevé, ce qui permet de voir le chariot 8, également vu de dessous. Ce chariot est ombré, pour mieux ressortir par rapport aux diverses parties du cadre 3. On voit ainsi qu'en 20, 21, 22, 23 le chariot s'appuie contre des parties correspondantes 24, 25, 26, 27 du cadre 3 sur lesquelles il peut glisser. La partie 22 du chariot 8 forme une aile logée dans un retrait de forme correspondante du cadre 3. Ces deux parties comprennent des faces 28 et 29 qui viennent s'appuyer l'une contre l'autre et arrêtent le chariot 8 dans sa position de repos. Par ailleurs, on peut voir aussi, à la figure 1a, que le chariot 8 s'appuie sur des glissières de chariot 30 et 31 du cadre 3. Le chariot 8 est ainsi positivement guidé sur le cadre 3 contre lequel il s'appuie des deux côtés, ce qui le retient en place tout en lui permettant de glisser linéairement entre une position de repos représentée à la figure 2 et une position d'actionnement des éléments de contact qui sera décrite plus loin.

A la figure 2, on distingue également un évidement 32 contenant un galet 33. On y voit également les fentes de contact 34 et, dans chacune d'elles, deux éléments de contacts tels que 35 et 36. Le ressort de rappel 9 du chariot 8 est également figuré, bien que comme indiqué, il appartienne au couvercle 7. Il pourait toutefois constituer une partie d'une autre pièce du lecteur et notamment du cadre de contact 3.

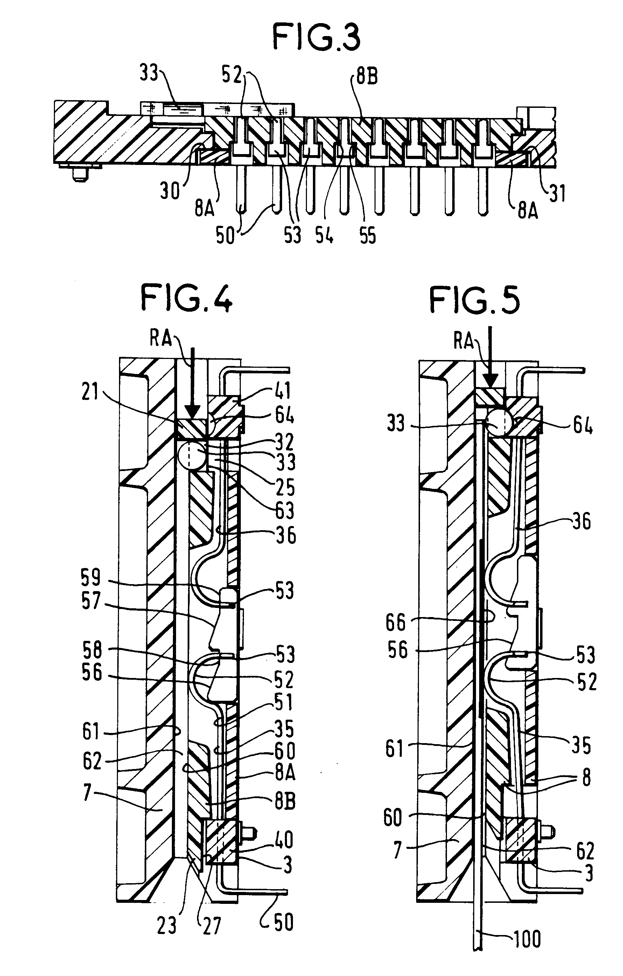

La figure 3 est une vue en coupe partielle du cadre de contact selon la ligne A-A de la figure 2. On peut y voir que le chariot 8 est composé de deux parties 8A et 8B. La partie 8A est celle que l'on peut voir à la figure 1a. On y voit mieux comment elles s'adapte sur les glissières de chariot 30, 31. Cette pièce est fixée à la pièce 8B, qui est celle que l'on voit à la figure 2, par collage par exemple, après la mise en place de cette dernière dans le cadre de contact 3.

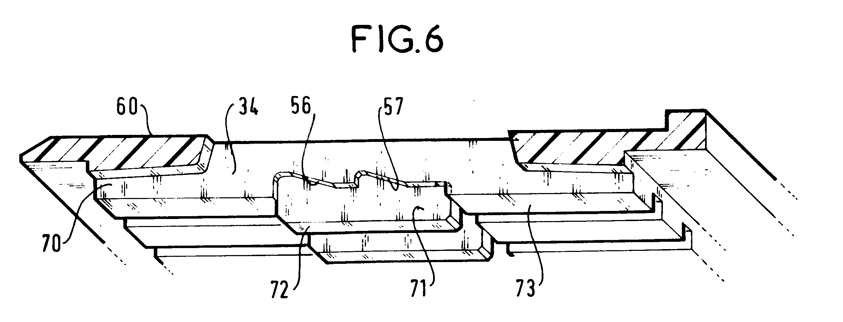

Avant d'examiner les éléments de contact tels que 35, aussi visibles à la figure 3, on se tournera d'abord vers les figures 4 et 5 qui représentent deux coupes du cadre de contact selon la ligne B-B de la figure 2, représentant respectivement le chariot en position de repos et dans sa position d'actionnement. On y retrouve les deux parties 8A et 8B du chariot et le cadre 3. On y retrouve aussi les parties exrêmes 23 et 21 du chariot 8 glissant sur les parties 27 et 25 du cadre 3.

Les éléments de contact tels 35 et 36 sont surmoulés dans des traverses 40 et 41 du cadre 3. Chacune des paires d'éléments de contact alignés occupe une fente dans le chariot 8, cette fente possède deux flancs symétriques. Les figures 4 et 5 représentent l'un de ces flancs, le plan de coupe passant devant l'autre. On voit que chaque élément de contact comprend une broche de raccordement 50, pliée vers l'extérieur du lecteur, une branche en porte-à-faux 51, prolongée en partie de contact arrondie 52 et terminée en partie de guidage 53. Les parties 50, 52, 53 se retrouvent à la figure 3 où l'on comprend que la partie de guidage 53 est un prolongement en T de l'élément de contact dont les branches latérales forment des épaulements 54, 55 qui sont en appui contre des rampes 56, 57 aménagées dans la matière du chariot 8. Le profil de ces rampes est tel que, le chariot étant dans la position de repos illustrée aux figures 1 à 4, les branches 54, 55 sont en appui sur les parties les plus "élevées" 58, 59 (au sens des figures 3 et 4) des rampes 56, 57, et que l'élément de contact 35 est dans la situation représentée, la partie la plus "basse" (toujours au sens des figures 3 et 4) de la partie courbe 52 affleurant la surface 60 du chariot 8. Il en va de même pour l'élément de contact 36. Cette surface 60, conjointement avec la surface 61 du couvercle 7 délimite, "verticalement", le trajet d'insertion 62 d'une carte dans le lecteur.

On voit ainsi que les éléments de contact 35, 36 sont retenus en situation de repos par les rampes 56, 57 du chariot 8, lui-même en position de repos, de manière à rester en dehors du trajet d'insertion d'une carte. Tant que le lecteur reste dans cette position de repos, une telle insertion peut donc s'accomplir, au-delà des parties de contact 52 des éléments de contact, sans que celles-ci frottent sur la carte. Une carte peut être ainsi librement insérée jusqu'à venir s'appuyer sur le galet 33.

On peut voir à la figure 4 que le galet 33, librement logé dans l'évidement 32 du chariot 8, s'y trouve emprisonné, puisque son logement est délimité en outre par une surface 63 du cadre 3 et la surface 61 du couvercle 7. Le dimensionnement est tel que le galet peut pivoter aisément. A l'insertion d'une carte 100, comme représenté à la figure 5, l'extrémité de la carte vient s'appuyer et pousser sur le galet 33, lequel, jouant le rôle de pièce d'entraînement, transmet la poussée à la partie 21 du chariot 8. Dans une première étape, correspondant à l'extension de la surface 63 avant que le galet 33 soit en face du logement 64, le galet reste en place devant la carte. La carte se déplace vers la droite, entraînant le chariot 8. Ce mouvement s'accomplit à l'encontre de la force de rappel procurée par le ressort 9 (figure 2), simplement illustrée par la flèche RA. Les rampes 56, 57 se déplacent par rapport aux extrémités 53 des éléments de contact. Après la partie "haute" 58, les rampes 56, 57 présentent des parties "descendantes" 65. Les éléments de contact 35 cessent ainsi progressivement d'être soutenus par les rampes du chariot 8. Le cambrage de ces éléments de contact est tel qu'ils sont élastiquement sollicités en direction du la carte en cours d'insertion. Ils viennent ainsi s'appuyer sur les emplacements de contact de la zone de contact 66. A partir de ce moment-là, la carte continuant sa progression, il s'exerce une action de frottement entre la carte et les éléments de contact, utile au nettoyage des contacts. La fin de cette première étape est illustrée à la figure 5 : le galet 33 arrive dans le logement 64. Il s'efface ainsi de devant la carte, s'immobilise dans le logement et immobilise en même temps le chariot 8. C'est la position représentée à la figure 5. Ensuite, sans résistance désormais, la carte 100 avance sous le galet 33, jusqu'à venir s'arrêter contre la partie 21 du chariot 8, faisant alors office de butée. Le frottement entre les éléments de contact et la carte se poursuit jusqu'à ce stade.

Alors, l'insertion de la carte est terminée, Le contact est établi entre chaque élément de contact et un emplacement de contact correspondant de la carte, avec une pression de contact prédéterminée correspondant au cambrage des éléments de contact.

La carte n'est plus soumise à la force de rappel tendant à la repousser, car celle-ci est soutenue par le galet 33 immobilisé dans le logement 64, dont il ne peut sortir en raison de la présence de la carte. Il en résulte un maintien en position de la carte qui reste cependant libre de céder à un effort d'extraction. Cet effort est minime, la force à surmonter étant seulement la force de frottement du galet sur l'extrémité de la carte.

Lorsque la carte ressort du lecteur, le ressort de rappel 9 repousse le chariot, l'effort de rappel est suffisant pour que, compte tenu des rampes 56 faiblement inclinées, les éléments de contact retournent dans la situation illustrée aux figures 3 et 4.

La figure 6 permet de mieux se rendre compte de la réalisation de la partie 8B du chariot 8. On y retrouve seulement des éléments déjà décrits et l'on peut voir que dans la fente 34 de cette pièce correspondant à chaque paire d'éléments de contact, visible dans la surface inférieure 60 du chariot, s'étend en une saignée 70. Dans chaque flanc de cette saignée, un retrait 71 forme les rampes 56, 57 par lesquels les éléments de contact sont actionnés. La paroi 72 de ce retrait dépasse la surface supérieure 73 de la saignée 71 et forme des traverses qui s'emboitent dans la partie 8A et contribuent à la renforcer. Bien entendu les deux flancs de chaque fente et saignée 34, 70 sont symétriques.

## Revendications

1. Lecteur de carte à puce comprenant des moyens de guidage et de positionnement de carte, et un cadre de contact portant des éléments de contact qui assurent le raccordement électrique avec des plages conductrices de la carte à puce et par lesquels sont établis des circuits intéressant l'appareil incorporant le lecteur de carte à puce, comprenant de plus un chariot (8) mobile par rapport au cadre de contact (3), ayant une position de repos qu'il occupe en l'absence de carte dans le lecteur, sous l'influence d'un moyen de rappel (9), et une position d'actionnement, dans laquelle il est poussé par une carte (100) introduite dans le lecteur, ledit chariot (8) étant agencé pour coopérer avec lesdits éléments de contact de manière que, lorsqu'il est en position de repos, le chariot (8) fait que lesdits éléments de contact soient maintenus dans une situation de repos dans laquelle ils sont en dehors du trajet d'insertion (62) d'une carte et que, lorsqu'il est en position d'actionnement, le chariot (8) fait que lesdits éléments de contact viennent en appui sur les emplacements de contact de la carte, caractérisé en ce que ledit chariot (8) comporte une rampe (56) coopérant avec un épaulement (54, 55) prévu près de l'extrémité (53) de chaque élément de contact (35, 36), cette rampe (56) étant aménagée dans la matière d'un flanc d'une fente du chariot (8) dans laquelle est disposé l'élément de contact.

2. Lecteur de carte à puce conforme à la revendication 1, caractérisé en ce que le mode de coopération entre le chariot (8) et les éléments de contact (35, 36) est tel que, lorsqu'il est en position de repos, le chariot (8) soulève les éléments de contact (35, 36), à l'encontre de leur propre force de rappel, et les maintienne ainsi en dehors du trajet d'insertion (62) d'une carte et que, lorsqu'il est en position d'actionnement, une carte (100) étant insérée dans le lecteur, le chariot (8) ait libéré les éléments de contact (35, 36) qui sont ainsi en appui contre les emplacements de contact (66) de la carte, sous l'effet de leur propre force de rappel.

3. Lecteur de carte à puce conforme à la revendication 2, caractérisé en ce que l'élément de contact comporte deux épaulements (54 et 55) et le chariot comporte deux rampes (56) coopérant respectivement avec ces épaulements, disposés de part et d'autre de l'axe longitudinal de l'élément de contact (35, 36).

4. Lecteur de carte à puce conforme à la revendication 3, caractérisé en ce que les deux épaulements (54, 55) sont obtenus par une conformation en T de l'extrémité libre (53) de l'élément de contact (35, 36).

5. Lecteur de carte à puce conforme à l'une quelconque des revendications qui précèdent, caractérisé en ce que, le chariot (8) est maintenu par le cadre de contact (3), par coopération de forme, de manière à pouvoir se déplacer par glissement d'une desdites positions à l'autre.

6. Lecteur de carte à puce conforme à la revendication 5, caractérisé en ce que le chariot (8) est composé de deux parties (8A, 8B), afin de permettre un assemblage facile du cadre de contact et du chariot.

7. Lecteur de carte à puce conforme à la revendication 5 ou 6, caractérisé en ce que le cadre de contact (3), ou une autre partie du lecteur, porte un doigt élastique (9) servant de moyen de rappel du chariot (8) et disposé à cette fin de manière à pousser le chariot vers sa position de repos.

8. Lecteur de carte à puce conforme à l'une quelconque des revendications qui précèdent, caractérisé en ce que le chariot (8) comporte un évidement (32) dans lequel est logée une pièce d'entraînement (33), laquelle s'appuie, d'un côté, sur une surface d'appui du cadre de contact (63) et dépasse, de l'autre côté dans le trajet d'insertion (62) d'une carte, de sorte qu'une carte (100) insérée rencontre la pièce d'entraînement (33), peu avant la fin de son trajet d'insertion, et entraîne le chariot (8) par l'intermédiaire de la pièce d'entraînement, de sa position de repos à sa position d'actionnement.

9. Lecteur de carte à puce conforme à la revendication 8, caractérisé en ce que ladite pièce d'entraînement (33) est de symétrie circulaire, avec l'axe de symétrie sensiblement perpendiculaire à la direction d'insertion d'une carte.

10. Lecteur de carte à puce conforme à la revendication 9, caractérisé en ce que la pièce d'entraînement est un galet cylindrique (33).

11. Lecteur de carte à puce conforme à l'une des revendications 8 à 10, caractérisé en ce que ladite surface d'appui (63) comprend un logement (64) correspondant à ladite position d'actionnement et destiné à recevoir une partie de la pièce d'entraînement (33), suffisante pour que celle-ci cesse d'être en saillie dans le trajet d'insertion (62) d'une carte, de sorte que la carte (100), dans la suite de son trajet d'insertion, jusqu'à une position finale dans laquelle elle rencontre une butée (21), maintienne la pièce d'entraînement (33) dans ledit logement (64) et maintienne par conséquent le chariot (8) dans la position d'actionnement, en soutenant ladite force de rappel du chariot (8).

## Claims

1. An IC card reader including card positioning and guide means, and a contact frame carrying contact elements which provide electrical contact with conducting areas of the IC card and via which circuits are established with the apparatus in which the IC card reader is incorporated, the reader further including a moving carriage (8) which is moveable relative to the contact frame (3), having a rest position that it occupies under the influence of return means (9) and in the absence of any card in the reader, and an actuated position into which it is thrust by a card (100) inserted into the reader, said carriage (8) being arranged to co-operate with said contact element in such a manner that when in its rest position, the carriage (8) causes the contact elements to be maintained in a rest position in which they lie off the insertion part (62) of a card, and when in the actuated position, the carriage (8) causes said contact elements to bear against the contact positions of the card, the reader being characterized in that said carriage (8) includes a ramp (56) co-operating with a shoulder (54, 55) provided close to the end (53) of each contact element (35, 36) said ramp (56) being formed in the substance of a flank in a slot in the carriage (8) in which the contact element is disposed.

2. An IC card reader according to claim 1, characterized in that the mode of co-operation between the carriage (8) and the contact elements (35, 36) is such that, when in the rest position, the carriage (8) raises the contact elements (35, 36) against their own return force and thus holds them off the insertion path (62) of a card, and when in the actuated position, with a card (100) being inserted in the reader, the carriage (8) releases the contact elements (35, 36) which thus bear against the contact positions (66) of the card under the effect of their own return force.

3. An IC card reader according to claim 2, characterized in that each contact element includes two shoulders (54 and 55) and the carriage includes two ramps (56) co-operating with respective ones of these shoulders and disposed on either side of the longitudinal axis of the contact element (35, 36).

4. An IC card reader according to claim 3, characterized in that the two shoulders (54, 55) are obtained by imparting a T- shape to the free end (53) of the contact element (35, 36).

5. An IC card reader according to any preceding claim, characterized in that the carriage (8) is held by the contact frame (3) by having co-operating shapes, in such a manner as to be displaced from one of said positions to the other by sliding.

6. An IC card reader according to claim 5, characterized in that the carriage (8) is constituted by two portions (8A, 8B) so as to facilitate assembling the contact frame and the carriage.

7. An IC card reader according to claim 5 or 6, characterized in that the contact frame (3) or some other portion of the reader includes a resilient finger (9) serving as carriage return means and disposed for this purpose in such a manner as to urge the carriage (8) towards its rest position.

8. An IC card reader according to any preceding claim, characterized in that the carriage (8) includes a hollow (32) in which a driving part (33) is received, which part bears on one side against a bearing surface of the contact frame (63) and projects, on the other side, into the insertion path (62) of a card, such that an inserted card (100) encounters the driving part (33) shortly before reaching the end of its insertion stroke, thereby driving the carriage (8) via the driving part so as to move the carriage from its rest position to its actuated position.

9. An IC card reader according to claim 8, characterized in that said driving part (33) is circularly symmetrical, having its axis of symmetry extending substantially perpendicularly to the card insertion direction.

10. An IC card reader according to claim 9, characterized in that the driving part is a cylindrical wheel (33).

11. An IC card reader according to any one of claims 8 to 10, characterized in that said bearing surface (63) includes a housing (64) corresponding to said actuated position and intended to receive a portion of the driving part (33), said portion being sufficient to enable the driving part to cease to project into the insertion path (62) of a card, whereby the card (100) as it continues its insertion stroke to a final position in which it encounters an abutment (21), maintains the driving part (33) in said housing (64) and consequently maintains the carriage (8) in its actuated position against the said return force applied to the carriage (8).

## Patentansprüche

1. Chipkartenleser, der Vorrichtungen zur Führung und zur Positionierung der Karte enthält, sowie eine Kontaktanordnung mit Kontaktelementen, die den elektrischen Anschluß der Leiterbahnen der Chipkarte gewährleisten, und durch welche die Schaltkreise aufgebaut werden, die für den Apparat von Bedeutung sind, der den Chipkartenleser enthält, welcher außerdem einen gegenüber der Kontaktanordnung (3) beweglichen Schlitten (8) enthält, welcher eine Ruheposition hat, die er aufgrund der Einwirkung einer Rückstellvorrichtung (9) einnimmt, wenn keine Karte im Lesegerät eingeschoben ist, und eine Betriebsposition, in welche er durch eine in den Leser eingeschobene Karte (100) gestoßen wird, wobei besagter Schlitten (8) so aufgebaut ist, daß er mit den besagten Kontaktelementen zusammenwirkt, so daß der Schlitten (8) in seiner Ruheposition bewirkt, daß die besagten Kontaktelemente in einer Ruhestellung gehalten werden, in welcher sie außerhalb des Einschubschachtes (62) der Karte sind, und so daß der Schlitten (8) in seiner Betriebsposition dafür sorgt, daß die besagten Kontaktelemente die Kontakte der Karte berühren,
dadurch **gekennzeichnet,** daß
der besagte Schlitten (8) eine Schräge (56) aufweist, die mit einer Schulter (54, 55) zusammenwirkt, welche nahe an dem Ende (53) eines jeden Kontaktelements (35, 36) vorgesehen ist, wobei diese Schräge (56) in dem Material der einen Seite des Schlitzes für den Schlitten (8) vorgesehen ist, in welcher das Kontaktelement angeordnet ist.

2. Chipkartenleser nach Anspruch 1,
dadurch gekennzeichnet, daß
Schlitten (8) und Kontaktelemente (35, 36) Zusammenwirken, so daß der Schlitten (8) in seiner Ruheposition die Kontaktelemente (35, 36) entgegen ihrer Rückstellkraft anhebt und sie so aus dem Einschubschacht (62) der Karte fernhält, und so daß der Schlitten (8) in der Betriebsposition, in der eine Karte (100) im Lesegerät eingeschoben ist, die Kontaktelemente (35, 36) freigibt, welche die Kontaktflächen (66) der Karte unter Einwirkung ihrer Rückstellkraft berühren.

3. Chipkartenleser nach Anspruch 2,
dadurch gekennzeichnet, daß
das Kontaktelement zwei Schultern (54 und 55) und der Schlitten zwei Schrägen (56) aufweist, welche jeweils mit den Schultern zusammenwirken, die beiderseits der Longitudinalachse des Kontaktelementes (35, 36) angeordnet sind.

4. Chipkartenleser nach Anspruch 3,
dadurch gekennzeichnet, daß
die beiden Schultern (54, 55) durch die T-Form des freien Endes (53) des Kontaktelementes (35, 36) entstehen.

5. Chipkartenleser nach einem der vorangehenden Ansprüche,
dadurch gekennzeichnet, daß
der Schlitten (8) durch die Kontaktanordnung (3) gehalten wird, wobei die Formen zusammenwirken, so daß ein Verschieben durch Gleiten von einer in eine andere Position ermöglicht wird.

6. Chipkartenleser nach Anspruch 5,
dadurch gekennzeichnet, daß
der Schlitten (8) aus zwei Teilen (8a, 8b) zusammengesetzt ist, um einen einfachen Zusammenbau der Kontaktanordnung und des Schlittens zu ermöglichen.

7. Chipkartenleser nach Anspruch 5 oder 6,
dadurch gekennzeichnet, daß
die Kontaktanordnung (3) oder ein anderer Teil des Lesers einen elastischen Finger (9) aufweist, der als Rückstellvorrichtung für den Schlitten (8) dient und dazu derart angeordnet ist, daß der Schlitten in seine Ruheposition gestoßen wird.

8. Chipkartenleser nach einem der vorangehenden Ansprüche,
dadurch gekennzeichnet, daß
der Schlitten (8) eine Aussparung (32) aufweist, in welcher ein Mitnehmer (33) plaziert ist, welcher sich von einer Seite auf eine Oberfläche der Abstützung der Kontaktanordnung (63) abstützt und von der anderen Seite in den Einschubschacht der Karte hineinragt, so daß eine eingeführte Karte (100) den Mitnehmer (33) kurz vor dem Ende des Einschubschachtes berührt und den Schlitten (8) mittels Mitnehmer von seiner Ruheposition in seine Betriebsposition mitnimmt.

9. Chipkartenleser nach Anspruch 8,
dadurch gekennzeichnet, daß
der Mitnehmer (33) rotationssymmetrisch ist, wobei die Symmetrieachse genau senkrecht zur Einschubrichtung der Karte steht.

10. Chipkartenleser nach Anspruch 9,
dadurch gekennzeichnet, daß
der Mitnehmer eine zylindrische Rolle (33) ist.

11. Chipkartenleser nach einem der Ansprüche 8 bis 10,
dadurch gekennzeichnet, daß
die Stützfläche (63) eine Aufnahme umfaßt, die der Betriebsposition entspricht und bestimmt ist, einen Teil des Mitnehmers (33) aufzunehmen, ausreichend dafür, daß dieser nicht mehr in den Einschubschacht der Karte vorspringt, so daß die Karte (100) während des Einschubes bis zu einer Endposition, bei der sie auf einen Anschlag trifft, den Mitnehmer (33) in der Aufnahme (64) festhält und somit den Schlitten (8) in der Betriebsposition festhält und folglich die Rückstellkraft des Schlittens (8) unterstützt.
